# EUROPEAN PATENT SPECIFICATION

(11) **EP 1 798 439 B1**
(45) Date of publication and mention of the grant of the patent: **04.03.2009**
(21) Application number: 05801566.0
(22) Date of filing: 30.09.2005
(51) Int. Cl.: F16D 66/02

(54) **WEAR DETECTOR FOR BRAKE SHOES OR PADS, PREFERABLY FOR RAILWAY CAR BRAKES**
VERSCHLEISSDETEKTOR FÜR BREMSBACKEN ODER BELÄGE SPEZIELL FÜR SCHIENENFAHRZEUGBREMSEN
DETECTEUR D'USURE DE PATINS DE FREINS DESTINE A ETRE UTILISE DE PREFERENCE AVEC DES FREINS DE VEHICULES FERROVIAIRES

(30) Priority: 01.10.2004 ES 200402345
(43) Date of publication of application: 20.06.2007
(73) Proprietor: Metro de Madrid, S.A., 28007 Madrid (ES)
(72) Inventor: GONZALEZ FERNANDEZ, Francisco Javier, E-28007 MADRID (ES); ALAMINOS NAVARRO, Jacinto, E-28007 MADRID (ES)
(74) Representative: Carpintero Lopez, Francisco
(86) International application number: PCT/ES2005/000530
(87) International publication number: WO 2006/037831

(56) References cited:
- EP-A- 0 320 167
- EP-A- 1 174 636
- EP-A2- 1 148 267
- EP-A2- 1 174 636
- GB-A- 1 266 276
- GB-A- 1 266 276
- GB-A- 2 149 034
- US-B1- 6 477 893

## Description

### OBJECT OF THE INVENTION

The object of the present invention refers to a brake shoe or pad wear detector, in particular for brake shoes or pads for railway vehicle brake systems, which offers considerable advantages of simplicity and efficiency over the traditional systems, while further achieving extreme reliability.

It is not necessary to include this device in the process of manufacturing or installing the friction material incorporated in these shoes or pads and it may therefore be fitted at discretion when these brake shoes or pads are going to be installed on the railway vehicle. Furthermore, the case could even arise of these detectors being able to be re-used on new brake pads if so deemed fit, as they will be extremely simple elements which are attached to the actual brake pad friction material.

### BACKGROUND OF THE INVENTION

In the sphere of brake systems applied to mobile vehicles both for road transport and for rail transport or other applications, use is made of brake wear detectors that warn when the thickness of the friction element has reached a level that is considered critical and it therefore becomes necessary to change the friction element in order to assure a perfect operation of the transport vehicle.

These systems envisage the addition of a conductor wire embedded in the interior of the friction material which is included there during the manufacturing process of the brake shoe or pad. This foresees that it may only be included during that manufacturing process and not after completing it. This means that it is necessary to maintain two manufacturing lines for these friction pads, one for those fitted with the wear detector wire and the other for those pads not fitted with said wear detector, as not all brake pads should have these wear detectors incorporated.

In addition, these systems operate by continuity of the conductor embedded and wear is detected when this wire is worn out due to friction with the brake disc and the electrical circuit to which this conductor wire is connected is opened.

This conductor embedded in the interior of the brake pad friction material has to be of a softer material than the actual friction material of the pad and, what is more, be made of a material that does not damage the brake disc.

European patent application EP-1270983 in favour of FEDERAL-MOGUL FRICTION PRODUCTS GmbH is already known. This refers to a brake pad friction material wear detector and in particular a brake pad wear detector for railways consisting of a spiral-wound conductor strip inserted, in such a way that it may be removed, in a recess made for the purpose in the friction material, where brake material wear is detected by means of the progressive wear of this spiral-wound conductor material and through the inclusion of an electronic circuit which measures the differing resistance of the conductor element according to the wear that takes place, so that the progressive thickness that the friction material has can be measured.

The manufacturing process for this system is bothersome and requires this detection device to have a complex electronic resistance measuring circuit, being furthermore extremely sensitive as it is subjected to very tough operating conditions.

Similarly familiar is patent application PCT WO03/008834 in favour of FEDERAL-MOGUL FRICTION PRODUCTS LIMITED, in which it may be seen how the brake pads have a friction material attached to a support element which forms the body of the brake pads and how the friction material has a conductor wire loop embedded in it during the manufacturing process. When wear takes place in the brake pad material, it is cut and the supply circuit is broken, so that the need to change the brake pads through having a critical operating thickness is indicated on the panel.

Document GB-A-1266276 discloses a brake shoe for a disc brake having a friction lining wear indicator. The indicator is made up of an elongated body for insertion in the body of the friction material, which, when it rubs against the brake disc as a result of friction material wear, closes the corresponding electrical circuit giving notice of the need to change the brake shoe.

These brake pad wear detector systems have the common feature of being included during the friction material manufacturing process. These state-of-the-art brake pads give rise to the existence of two types of brake pads in the production process: those not fitted with the wear detector and those that are, therefore increasing both the production and the storage cost since it is necessary to maintain a stock of both part numbers.

In order to try to avoid these difficulties, we have developed the device of the invention, which combines the fact of being an extremely sure and reliable device with the simplicity of its execution and manufacture. This device also permits its fitting to brake shoes or pads prior to their installation on the vehicle, without the device having to be incorporated during the manufacture of the friction material.

### DESCRIPTION OF THE INVENTION

The brake pad wear detector of the invention is made of an elongated body, preferably T-shaped, which is engaged in a slot made in the actual friction material of the brake shoe or pad.

This wear detector is fitted, for example, occupying the width of the pad and for fastening purposes it has end tabs which are bent over appropriately after fitting and prevent the detector from becoming accidentally disengaged.

The T-shaped detector body in which, as already explained, the side fins perform the function of retaining it on the friction material, is completed with a central fin which is the one that performs the actual detection functions since, as the friction material is gradually worn down, this fin will become closer to the disc brake, until the wear on the friction material is such that said fin is flush with the disc brake and it comes into contact itself with the brake disc, which is when the circuit between the detector and the brake disc is closed, giving acoustic, visual or luminous warning that the thickness of the friction material of the pads has reached a critical wear situation and it is time for them to be replaced.

This central fin, which acts as a contact element with the disc brake, may be executed in continuous form or else be divided up into various ridges along the detector in order to monitor the wear in certain areas of the width of the shoe.

At one of its ends this wear detector incorporates an electrical supply terminal which will be fed by the control circuit built into the actual unit.

This invention envisages multiple preferred embodiments, as may be different sections of the detector which are not that of a simple "T", but which may take on other geometric configurations, in compliance with the premise of acting as an assured mounting element on the actual friction material incorporated in the pad. This element has to be retained securely on the pad, for which purpose any other simple retaining system may be used instead of those expanding fins.

### DESCRIPTION OF THE DRAWINGS

To supplement the description being given and in order to assist a clearer appreciation of the features of the invention, in accordance with a preferred example of practical embodiment of the same, a set of drawings is attached as an integral part of this description wherein there is represented, on an informative and non-restrictive basis, the following:
Figure 1 represents a plan and profile view of the wear detector of the invention before being fitted on the actual brake pad or shoe.
Figure 2 represents a perspective view of the detector of figure 1 wherein the retaining tabs and the ridges incorporated on the active surface of the detector are shown clearly.
Figure 3 shows a plan and sectional view of the installation of the wear detector of the invention.
Figure 4 represents a brake shoe incorporating the wear detector.
Figure 5 shows a half of the slot incorporated in the brake shoe which will be used for coupling the wear detector.
Figure 6 represents a front view of the wear detector of the invention in which its section may be observed clearly.

### DESCRIPTION OF A PREFERRED EMBODIMENT OF THE INVENTION

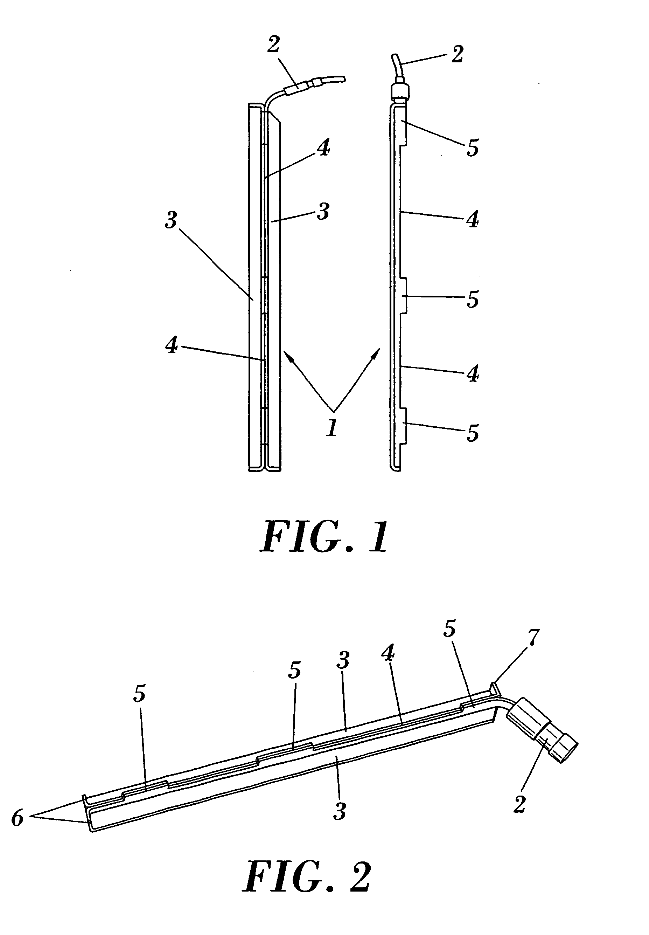

Figure 1 shows both a plan and a profile view of the wear detector (1) of the invention, which is made up of a T-shaped elongated body at the end of which an electrical terminal (2) is connected. This T-shaped detector has two projecting fins (3), which will be the ones that are engaged with appropriate slots in the brake pad, as will be seen in other representative figures, while centrally the arm of this body (4) will be the actual arm that performs the functions of a wear sensor, as it will be the area that first comes into contact with the brake disc when the friction material incorporated into the brake shoe is worn down.

This area (4) may be executed continuously or have a number of ridges (5), which will be the first parts of the sensor to undergo wear.

Figure 2 shows the detector of the invention in a perspective view, in which we may observe all the elements included and referenced in figure 1, but in particular, in this representation, the anterior tabs (6) which act as a stop with the slot in the brake shoe or pad, preventing its accidental disengagement, while at the rear end alongside the electrical terminal (2) there is a tab (7) which acts in conjunction with the anterior tabs (6) to anchor these sensors securely to the body of the brake shoe or pad.

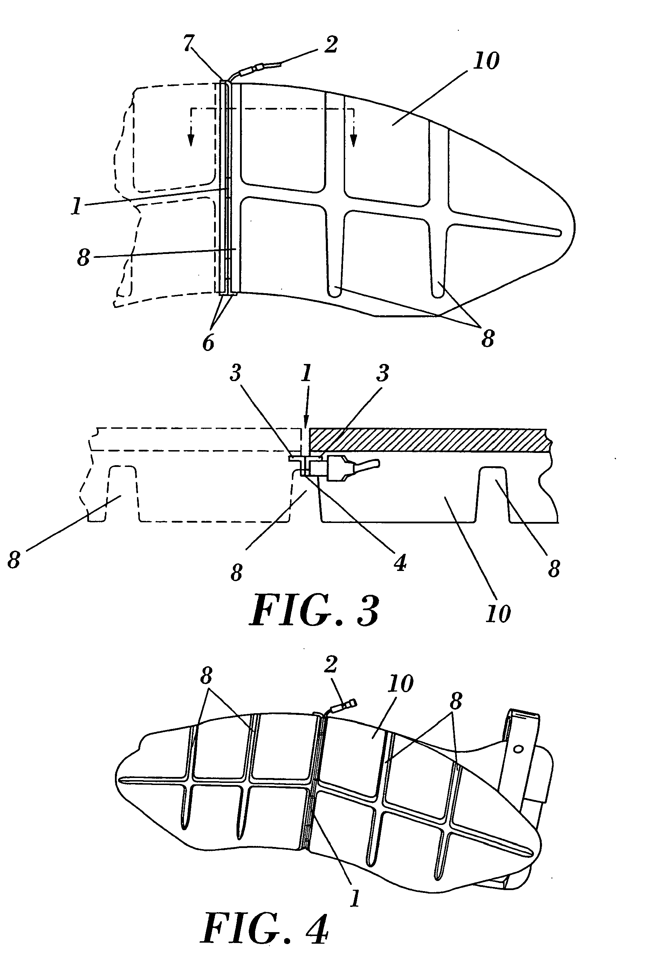

Figure 3 shows a plan and sectional view of a shoe body (10) in which the wear detector (1) of the invention is fitted in one of the slots (8) that they are usually provided with as a means of dissipation of heat and removal of worn friction material, using the side fins (3) for attachment to the actual body of the friction material of the shoes or pads while the arm (4) is the sensor element proper.

The installation of this detector (1) is done transversely to the brake shoe or pad and it is secured from both ends by the locking tabs (6) and (7).

Figure 4 shows a representation very similar to that of the previous figure, but this time showing the whole body of a shoe where the wear detector device is attached.

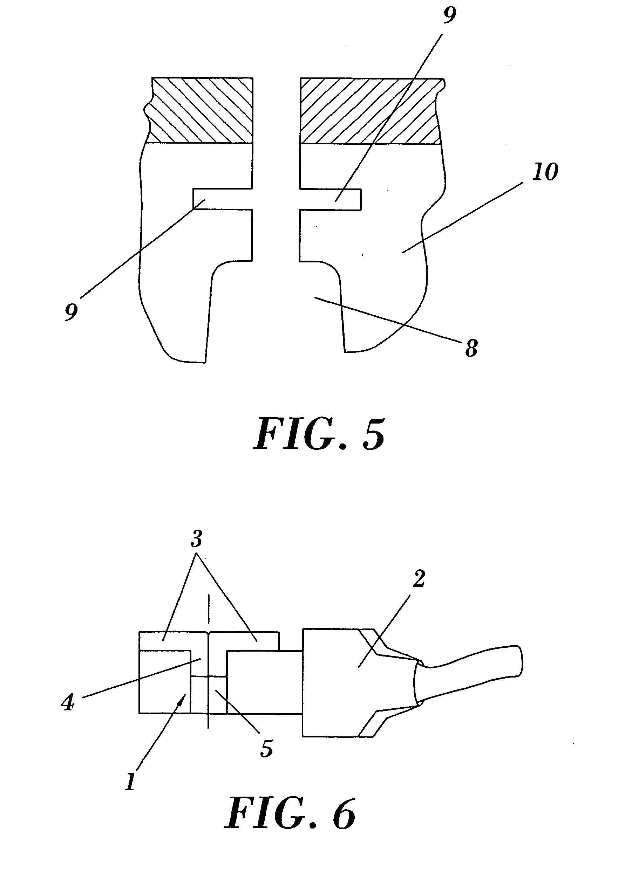

Figure 5 represents the form of a half slot (9) where the fin (3) of the detector device of the invention is coupled and how the actual friction material of the brake shoe or pad (10) is the element retaining the wear detector.

Lastly, figure 6 shows a profile view of the body of the detector (1) and how the side fins (3) for engagement in the slots (9) stand out and how the central fin (4) projects in ridges (5), which are the sensors proper that will come into contact with the brake disc.

## Claims

1. Brake pad or shoe wear detector of application to railway vehicles, said brake pad comprising a friction material, the detector being made up of an elongated body for insertion in the friction material, **characterised in that**
- said elongated body has a T-shaped cross-section with two counterposed fins (3) and a central fin (4), which in the use position of the detector is facing a brake disc,
- and said central fin (4) constitutes an element of electric contact with the brake disc as a result of friction material wear, closing an electrical circuit giving notice of the need to change the brake shoes or pads.

2. Brake pad or shoe wear detector according to claim 1, **characterised in that** in at least one of the two ends of the elongated body the detector has at least one transverse tab (6, 7).

3. Brake pad or shoe wear detector according to any of claims 1-2, **characterised in that** the central fin (4) is a continuous fin.

4. Brake pad or shoe wear detector according to any of claims 1-2, **characterised in that** the central fin (4) is a discontinuous fin made up of at least one ridge.

5. Brake assembly, which comprises a brake pad or shoe, and a brake pad or shoe wear detector according to any previous claim, the detector being incorporated in a slot (8) of said brake pad, **characterised in that**
- said brake pad or shoe includes two slots (9) for coupling the detector by inserting the counterposed fins (3) made on both sides of such slots (8).

6. Brake assembly according to claim 5, **characterised in that** said detector is engaged across the whole width of the brake shoe or pad.

## Patentansprüche

1. Bremsbelag- oder Bremsschuhverschleißdetektor zur Verwendung bei Schienenfahrzeugen, wobei der Bremsbelag ein Reibmaterial aufweist, wobei der Detektor aus einem langgestreckten Körper zum Einsetzen in das Reibmaterial besteht, **dadurch gekennzeichnet, dass**
- der langgestreckte Körper einen T-förmigen Querschnitt mit zwei einander entgegengesetzten Stegen (3) und einem Mittelsteg (4) aufweist, welcher in der Gebrauchsposition des Detektors einer Bremsscheibe zugewandt ist,
- und der Mittelsteg (4) ein Element bildet, das infolge des Reibmaterialverschleißes in elektrischen Kontakt mit der Bremsscheibe gelangt, wobei ein elektrischer Kreis geschlossen wird, welcher die Notwendigkeit des Austauschs der Bremsschuhe oder -beläge anzeigt.

2. Bremsbelag- oder Bremsschuhverschleißdetektor nach Anspruch 1, **dadurch gekennzeichnet, dass** der Detektor an mindestens einem der beiden Enden des langgestreckten Körpers mindestens einen querverlaufenden Ansatz (6, 7) aufweist.

3. Bremsbelag- oder Bremsschuhverschleißdetektor nach einem der Ansprüche 1-2, **dadurch gekennzeichnet, dass** der Mittelsteg (4) ein durchgehender Steg ist

4. Bremsbelag- oder Bremsschuhverschleißdetektor nach einem der Ansprüche 1-2, **dadurch gekennzeichnet, dass** der Mittelsteg (4) ein unterbrochener Steg (4) aus mindestens einer Rippe ist.

5. Bremsanordnung mit einem Bremsbelag oder -schuh und einem Bremsbelag- oder Bremsschuhverschleißdetektor nach einem der vorhergehenden Ansprüche, wobei der Detektor in einem Schlitz (8) des Bremsbelags angebracht ist, **dadurch gekennzeichnet, dass**
- der Bremsbelag oder -schuh zwei Schlitze (9) aufweist, um den Detektor durch Einführen der auf beiden Seiten derartiger Schlitze (8) ausgebildeten entgegengesetzten Stege (3) mit diesem zu verbinden.

6. Bremsanordnung nach Anspruch 5, **dadurch gekennzeichnet, dass** der Detektor über die gesamte Breite des Bremsschuhs oder -belags in Eingriff ist.

## Revendications

1. Détecteur d'usure de plaquettes ou segments de frein destinés à être appliqués à des véhicules ferroviaires, ladite plaquette de frein comprenant un matériau de friction, le détecteur étant constitué d'un corps oblong pour l'insertion dans le matériau de friction, **caractérisé en ce que**
- ledit corps oblong possède une section transversale en forme de T avec deux ailettes contre-posées (3) et une ailette centrale (4) qui, en position d'utilisation du détecteur, est orientée vers un disque de frein,
- et ladite ailette centrale (4) constitue un élément de contact électrique avec le disque de frein par suite de l'usure du matériau de friction, fermant un circuit électrique signalant la nécessité de changer les segments ou plaquettes de frein.

2. Détecteur d'usure de plaquettes ou segments de frein selon la revendication 1, **caractérisé en ce que** dans au moins une des deux extrémités du corps oblong, le détecteur possède au moins une patte transversale (6, 7).

3. Détecteur d'usure de plaquettes ou segments de frein selon l'une quelconque des revendications 1-2, **caractérisé en ce que** l'ailette centrale (4) est une ailette continue.

4. Détecteur d'usure de plaquettes ou segments de frein selon l'une quelconque des revendications 1-2, **caractérisé en ce que** l'ailette centrale (4) est une ailette discontinue formée par au moins une nervure.

5. Ensemble de freinage, qui comprend une plaquette ou segment de frein, et un détecteur de plaquette ou segment de frein selon l'une quelconque des revendications précédentes, le détecteur étant incorporé dans une fente (8) de ladite plaquette de frein, **caractérisé en ce que**
- ladite plaquette ou segment de frein présente deux fentes (9) pour le couplage du détecteur en insérant les ailettes contre-posées (3) réalisées sur les deux côtés de ces fentes ( 8 ) .

6. Ensemble de freinage selon la revendication 5, **caractérisé en ce que** ledit détecteur est engagé sur toute la largeur du segment ou plaquette de frein.
